# EUROPÄISCHE PATENTSCHRIFT

(11) **EP 2 244 073 B1**
(45) Veröffentlichungstag und Bekanntmachung des Hinweises auf die Patenterteilung: **08.02.2012**
(21) Anmeldenummer: 10006224.9
(22) Anmeldetag: 27.12.2006
(51) Int. Cl.: G01F 1/06, G01F 15/00, G01F 15/14

(54) **Messkapsel für Flüssigkeitszähler und Flüssigkeitszähler**
Measuring capsule for fluid counter and fluid counter
Capsule de mesure pour un compteur de liquide et compteur de liquide

(30) Priorität: 13.01.2006 DE 102006002519
(43) Veröffentlichungstag der Anmeldung: 27.10.2010
(62) Teilanmeldung aus: 06841175.0
(73) Patentinhaber: Minol Messtechnik W. Lehmann GmbH & Co. KG, 70771 Leinfelden-Echterdingen (DE)
(72) Erfinder: Lehmann, Werner, 70186 Stuttgart (DE)
(74) Vertreter: Friz, Oliver

(56) Entgegenhaltungen:
- EP-A1- 1 326 061
- EP-B1- 0 842 398
- DE-A1- 10 214 418

## Beschreibung

Die Erfindung betrifft eine Messkapsel für einen tangential angeströmten Flüssigkeitszähler, zum austauschbaren Einsatz in ein Unterputz- oder Aufputzgehäuse des Flüssigkeitszählers, wobei die Messkapsel einen eine Messkammer mit einem darin aufgenommenen Flügelrad begrenzenden Messbecher mit einem Einlass in die Messkammer und einem Auslass aus der Messkammer und einen Zählwerkteil aufweist.

Die Erfindung betrifft also keine sogenannten Koaxialzähler, wo die Messkammer mit Flügelrad oberhalb eines Einströmbereichs des Unterputz- oder Aufputzgehäuses liegt, sondern einen Flüssigkeitszähler, bei dem die Messkammer mit Flügelrad und der Einlass und der Auslass des Messbechers im wesentlichen in einer Ebene liegen. Das Flügelrad wird also im Wesentlichen in seiner Drehebene angeströmt.

Messkapseln für Flüssigkeitszähler (Flügelradzähler) der vorstehend genannten Art sind in großem Umfang und großer Vielfalt bekannt. Sie finden insbesondere als Gebrauchswasserzähler in der Gebäudebewirtschaftung Verwendung. Um das Flügelrad möglichst radial außen und möglichst tangential anzuströmen, ist bereits der Vorschlag gemacht worden, das Unterputz- oder Aufputzgehäuse mit einem Einlassstutzen und Auslassstutzen auszubilden, der asymmetrisch zu einer Längsmittelachse oder -ebene des Gehäuses, also in einem Abstand zu dieser, angeordnet ist. Dies ist aber aufgrund der fehlenden Symmetrie nachteilig. Es sind auch Messkapseln mit nach außerhalb der Messkammer erstreckten verhältnismäßig langen Einlass- und Auslassstutzen am Messbecher bekannt geworden, die ihrerseits schräg und von der Längsmittelachse abgesetzt und asymmetrisch verlaufen. Diese benötigen aber einen großen Bauraum bei dem metallischen Unterputz- oder Aufputzgehäuse, damit die Messkapsel mit ihren langen Einlass- und Auslassstutzen in dem Gehäuse angeordnet werden kann, insbesondere wenn dieses in einer Längsmittelachse liegende Einlass- und Auslassstutzen aufweist. Dieser große Bauraum radial außerhalb der Messkammer oder des Messbechers bedingt somit, dass das Unterputz- oder Aufputzgehäuse des Flüssigkeitszählers sehr groß ausgebildet werden muss, was als nachteilig anzusehen ist.

DE 102 29 794 C1 offenbart einen gattungsfremden Flüssigkeitszähler, bei dem das Aufputzgehäuse und die Messkapsel einstückig aus Kunststoff gespritzt sind. Das Gehäuse weist einen in der Längsmittelachse liegenden Einlassstutzen und einen Auslassstutzen auf, von denen sich schräg zur Längsmittelachse ein Einlasskanal bzw. ein Auslasskanal erstreckt, um eine in etwa tangentiale Anströmung des Flügelrads zu erreichen. Aufgrund der Einstückigkeit ist ein Austausch einer Messkapsel nicht möglich und die Verwendung im Unterputzbereich verbietet sich daher. Außerdem baut das Gehäuse bei gegebenem Innendurchmesser der Messkammer nach radial außen sehr ausladend, was als nachteilig anzusehen ist. Dies ist jedoch zwingend erforderlich, um den Einströmkanal so ausbilden zu können, dass die Flüssigkeit im Wesentlichen tangential das Flügelrad beaufschlagt.

EP 0 842 398 B1 zeigt einen nicht gattungsgemäßen Einstrahl-Flüssigkeitszähler mit einem metallischen Gehäuse, in dem ein eine Messkammer mit einem darin aufgenommenen Flügelrad begrenzender Messbecher mit einem Einlass in die Messkammer und einem Auslass aus der Messkammer vorgesehen ist, und mit einem darüber angeordneten Zählwerkteil, wobei der Einlass und der Auslass des Messbechers in einer Längsmittelachse des Messbechers und des metallischen Gehäuses des Flüssigkeitszählers liegen und der Messbecher bei einer Ausführungsform eine und bei einer anderen Ausführungsform zwei zu dieser Längsmittelachse geneigte große Einströmöffnungen aufweist, die eine zumindest teilweise Umlenkung der Flüssigkeit in eine tangentiale Richtung zum Flügelrad bewirken. Eine austauschbare gattungsgemäße Messkapsel ist nicht vorgesehen. Dieser Einstrahl-Flüssigkeitszähler benötigt jedoch eine sehr dicke Wandung des den Messbecher bildenden Teils, was in der Folge den Durchmesser des Flügelrads in nachteiliger Weise begrenzt.

EP 1 326 061 A1 offenbart einen ebenfalls nicht gattungsgemäßen Flüssigkeitszähler in Form eines Koaxialzählers, wobei eine Messkapsel eine Innenhaube und eine Außenhaube umfasst. Ein Zählwerkteil, der von der Innenhaube überfangen und abgeschlossen ist, ist in eine topfförmige Ausnehmung eines massiven topfförmigen Bauteils eingesetzt, welches seinerseits mit einem Messbecher verrastbar ist, der eine Messkammer mit einem darin aufgenommenen Flügelrad begrenzt. Die so gebildete Einheit ist mittels des massiven topfförmigen Bauteils in ein Unterputz- oder Aufputzgehäuse einschraubbar und von einer Außenhaube überfangen, die gegen das topfförmige Bauteil verrastet ist.

DE 102 14 418 A1 zeigt einen Zählwerksteil eines Flüssigkeitszählers mit einem auf ein Zählwerksgehäuse aufsteckbaren äußeren Abdeckelement, in welches ein elektronisches Übermittlungsmodul und ein Signalaufnehmer integriert ist.

Ausgehend vom vorstehend beschriebenen Stand der Technik liegt der vorliegenden Erfindung die Aufgabe zugrunde, eine Messkapsel für Flüssigkeitszähler der eingangs beschriebenen Art dahingehend zu verbessern, dass der an den Messbecher nach radial außen anschließende Bauraum möglichst gering gehalten wird, aber dennoch eine hydrodynamisch günstige Anströmung des Flügelrads in einem radial äußeren Bereich und ungefähr tangential erreicht werden kann. Außerdem soll auf ausladende Einlass- und Auslassstutzen am Messbecher verzichtet werden können. Es soll die Größe des Flüssigkeitszählers insgesamt möglichst gering gehalten werden.

Diese Aufgabe wird durch eine Messkapsel mit den Merkmalen des Anspruchs 1 gelöst.

Die Längsmittelachse ist dabei diejenige Achse, die durch den Mittelpunkt des Messbechers und/oder durch den Drehpunkt oder die Drehachse des Flügelrads verläuft und in dessen Drehebene liegt. Es wurde erfindungsgemäß festgestellt, dass auf eine Ausbildung des Messbechers mit in radialer Richtung ausladenden Einlass- und Auslassstutzen zur Erreichung einer im Wesentlichen tangentialen Anströmung des Flügelrads verzichtet werden kann, wenn in einer Wandung des Messbechers zur Bildung des Einlasses und des Auslasses mehrere zur Längsmittelachse geneigte Einströmöffnungen vorgesehen werden.

Durch den radialen Bauraum lässt sich eine Reihe von Vorteilen erreichen, und es lassen sich vorteilhafte Weiterbildungen realisieren. Zum einen eröffnet dieser radiale Bauraum die Möglichkeit, dass die Messkapsel mittels des über den Zählwerkteil mit aufgebrachter Innenhaube stülpbaren ringförmigen Montageelements gegen das Unterputz- oder Aufputzgehäuse fixierbar ist und dass der Außendurchmesser des Montageelements geringer ist als der Innendurchmesser der Außenhaube, so dass die Außenhaube die am Unterputz- oder Aufputzgehäuse fixierte Messkapsel und das Montageelement abzudecken vermag.

Das Montageelement kann dabei in axialer Richtung (Richtung der Drehachse des Flügelrads) eingesetzt werden und auch durch einen axialen Zugriff geschlossen oder geöffnet werden.

Nach einem weiteren Erfindungsgedanken weist das Montageelement wiederum in axialer Richtung zugängliche Werkzeugansetzstellen auf, um mittels eines Montagewerkzeugs in Fixierstellung gebracht werden zu können.

Nach einem weiteren Erfindungsgedanken weist das Montageelement radial innen Ausnehmungen auf, die die Werkzeugansetzstellen bilden. Der Monteur kann dann mit einem Montagewerkzeug axial in den Bauraum außerhalb der Innenhaube eingreifen und das Montageelement festziehen oder lösen.

Bei einer weiteren bevorzugten Ausführungsform der erfindungsgemäßen Messkapsel ist die

Innenhaube insbesondere zusammen mit dem Zählwerkteil gegenüber dem Messbecher verdrehbar, um beim Endverbraucher beispielsweise eine horizontale Anordnung der Anzeige realisieren zu können.

Nach einem weiteren Erfindungsgedanken erweist es sich als besonders vorteilhaft, dass die Außenhaube mittels einer Plombe gegen unbefugtes Entfernen gesichert ist. Auf diese Weise ist nämlich zugleich erreicht, dass die Messkapsel nicht auf unbefugte Weise aus dem Unterputz- oder Aufputzgehäuse gelöst werden kann, da sich ja das Montageelement hierfür innerhalb der Außenhaube befindet.

Nach einem weiteren Erfindungsgedanken ist die Außenhaube gegen die Innenhaube fixiert, und diese Fixierung ist vorzugsweise auch durch eine Plombe gegen unbefugtes Lösen gesichert. Die Verbindung von Außenhaube und Innenhaube ist vorzugsweise derart, dass die Außenhaube drehbar ist und bei Drehen der Außenhaube die Innenhaube in Drehmitnahme ist, so dass das Zählwerk entsprechend den Anforderungen beim Einbau positioniert werden kann.

Bei einer bevorzugten Ausführungsform umgibt also die Außenhaube das Montageelement so, dass es nicht zugänglich ist, solange die Außenhaube nicht entfernt wird. Hierdurch wird ein wirksamer Schutz gegen Missbrauch erreicht. Bei bekannten Messkapseln und Flügelradzählern der eingangs genannten Art wurde das ausladende Montageelement über die Abdeckung der Messkapsel übergestülpt; es war also von außen zugänglich und musste deshalb aufwendig mittels Plomben gegen einen Flansch des Unterputz- oder Aufputzgehäuses gesichert werden. Dieser Flansch machte das Unterputz- oder Aufputzgehäuse außerdem radial sehr ausladend. Gerade bei Unterputzgehäusen liegen diese Plomben dann auch tief in der Wand an schwer zugänglicher Stelle und können nur sehr aufwendig gelöst bzw. nach dem Austausch gegen eine neue Messkapsel nur sehr schwer und aufwendig wieder angebracht werden. Dieser Nachteil kann mit der vorliegenden Erfindung umgangen werden.

Nach einer weiteren Erfindungsvariante erweist es sich als vorteilhaft, wenn in dem radialen Bauraum weitere Komponenten der Messkapsel untergebracht sind, insbesondere eine elektronische Einrichtung zur Erfassung und zur Aussendung von Verbrauchsdaten vorgesehen ist.

Zusätzlich kann es sich als vorteilhaft erweisen, wenn das Zählwerk und die Innenhaube nach radial innen rückspringende Bereiche aufweisen, in welche Komponenten der elektronischen Einrichtung einragen oder darin aufgenommen sind.

Nach einem wiederum an sich selbständig schutzbegründenden Erfindungsgedanken erweist es sich als vorteilhaft, wenn die elektronische Einrichtung zur Erfassung und Aussendung von Verbrauchsdaten wasserdicht in die Außenhaube integriert ist. Diese elektronische Einrichtung, häufig auch als Funkmodul bezeichnet, wird dann zusammen mit der Außenhaube auf die Messkapsel aufgesetzt. Funkmodul einerseits und Zählwerkteil der Messkapsel bleiben somit vollständig voneinander getrennt. Die Gestalt der Außenhaube und derjenigen Bereiche der Außenhaube, welche elektronische Komponenten zur Erfassung und zur Aussendung von Verbrauchsdaten, vorzugsweise über Funk, umfassen, sind so ausgebildet, dass sie nicht mit Komponenten des Zählwerkteils kollidieren, aber dennoch so angeordnet sind, dass sie bestimmungsgemäß mit Komponenten des Zählwerkteils, beispielsweise mit einer rotierenden Scheibe mit Magnet, zusammenwirken können.

Die Einströmöffnungen haben vorzugsweise eine runde oder ovale Querschnittsfläche (senkrecht zu ihrer Längserstreckung betrachtet), was die Strömungsführung und Strömungsumlenkung positiv beeinflusst und zur Erreichung einer hohen Zählgenauigkeit beiträgt. Auch ist die Wandungsfläche und damit der Strömungswiderstand am geringsten. Es zeigte sich weiter überraschenderweise, dass die erwähnten mehreren geneigten Einströmöffnungen auch verhältnismäßig kurz sein können und dennoch eine Umlenkung der Flüssigkeit oder des Wassers bewirken, so dass das Flügelrad in einem radial äußeren Bereich der Flügel oder mithin im Wesentlichen tangential angeströmt wird. Auf diese Weise lassen sich Baugrößen des Flüssigkeitszählers erreichen, die sonst nur bei Zählern denkbar sind, bei denen keine austauschbare Messkapsel verwendet wird. Dennoch kann die erforderliche Zählgenauigkeit bei allen Strömungsgeschwindigkeiten erreicht werden.

Es erweist sich auch als vorteilhaft, wenn die geneigten Einströmöffnungen ihrerseits gerade sind, also entlang einer geraden Achse erstreckt sind.

Die Einströmöffnungen haben vorzugsweise eine größte Abmessung des Strömungsquerschnitts, insbesondere einen Durchmesser der Querschnittsfläche von 2 bis 5 mm, insbesondere von 3 bis 5 mm und weiter insbesondere von 3,5 bis 4,5 mm.

Es erweist sich weiter als vorteilhaft, wenn die Einströmöffnungen um die Längsmittelachse des Messbechers herum angeordnet sind. Um möglichst viele Einströmöffnungen pro Flächeneinheit vorzusehen, erweist es sich als vorteilhaft, wenn eine Einströmöffnung zentral, im wesentlichen auf der Längsmittelachse angeordnet ist und weitere Einströmöffnungen um diese Einströmöffnung herum angeordnet sind.

Die Anzahl der Einströmöffnungen des Einlasses oder des Einlassbereichs des erfindungsgemäßen Messbechers beträgt vorzugsweise 3 bis 10, insbesondere 3 bis 9, insbesondere 4 bis 8, insbesondere 5 bis 8 und weiter insbesondere 6 bis 8. Eine optimale Anzahl ist 7.

Es wurde erfindungsgemäß ermittelt, dass die Neigung der Einströmöffnungen zur Längsmittelachse vorzugsweise wenigstens 35°, insbesondere 35° - 55°, insbesondere 35° - 50°, insbesondere 37° - 45° beträgt.

Nach einem weiteren Erfindungsgedanken wird vorgeschlagen, die Einströmöffnungen derart auszubilden und zur Längsmittelachse des Messbechers derart anzuordnen, dass sie in Richtung dieser Längsmittelachse eine lichte Querschnittsfläche in das Innere des Messbechers bilden. Es hat sich nämlich überraschenderweise gezeigt, dass sich bei einer derartigen Ausbildung gerade bei geringen Strömungsgeschwindigkeiten eine hohe Zählgenauigkeit erreichen lässt. Bei hohen Strömungsgeschwindigkeiten wird die Flüssigkeit durch die geneigten Einströmöffnungen wohl nahezu vollständig in die tangentiale Richtung abgelenkt. Bei sehr niedrigen Strömungsgeschwindigkeiten wird angenommen, dass die Flüssigkeit zumindest teilweise auch der lichten Querschnittsfläche der Einströmöffnungen folgend strömt und damit das Flügelrad zumindest auch weiter radial innen anströmt. Überraschenderweise sind die Zählgenauigkeiten für geringe Strömungsgeschwindigkeiten bei Vorsehung einer lichten Querschnittsfläche in Richtung der Längsmittelachse des Messbechers höher.

Im Hinblick auf eine möglichst geringe radiale Erstreckung des Messbechers ausgehend vom Innendurchmesser der Messkammer erweist es sich als besonders vorteilhaft, dass die Einströmöffnungen nur einen verhältnismäßig kurzen Einströmkanal benötigen, dessen Länge vorzugsweise lediglich 5 bis 12 mm, insbesondere 5 bis 10 mm beträgt, wobei jeweils die in der Mitte einer Einströmöffnung ermittelte Länge zwischen Innenumfang und Außenumfang der Wandung des Messbechers in diesem Bereich als Länge bezeichnet wird.

Es erweist sich insofern auch als besonders vorteilhaft, dass keine nach radial außen erstreckten Einlass- bzw. Auslassstutzen an dem Messbecher selbst vorgesehen werden müssen. Es erweist sich als vorteilhaft, wenn lediglich ein Abschnitt des Messbechers, in dem der Einlass ausgebildet ist, eine größere Wandstärke aufweist als in Umfangsrichtung angrenzende Bereiche des Messbechers. Diese Wandstärke des betrachteten Abschnitts des Einlasses ist vorteilhafterweise lediglich 1,3 bis 2,5 mal, insbesondere 1,7 bis 2,5 mal so groß wie diejenige Wandstärke der angrenzenden Bereiche. Insofern ist die Außenabmessung des Messbechers nur geringfügig, insbesondere nur 1 bis 5 mm, vorzugsweise 1 bis 3 mm größer als der Außendurchmesser des übrigen zylindrischen bzw. topfförmigen Grundkörpers des Messbechers im Bereich minimaler Wandstärke.

Dadurch dass die Wandung des Messbechers zur Bildung der Einströmöffnungen verwendet wird, ist der hierfür benötigte Bauraum gering. Es wird außerhalb des Umfangs des Messbechers praktisch kein Bauraum benötigt. Die Abmessung des Messbechers und des Unterputz- oder Aufputzgehäuses ist daher viel geringer als bei bekannten Flüssigkeitszählern mit austauschbarer Messkapsel.

In Weiterbildung der Erfindung erweist es sich als vorteilhaft, wenn derjenige Abschnitt des Messbechers, in dem der Einlass ausgebildet ist, eine äußere Umfangskontur aufweist, die komplementär zur Innenkontur des Unterputz- oder Aufputzgehäuses im Bereich von dessen Einlassöffnung ausgebildet ist und mit der der Messbecher dichtend an die Innenkontur des Unterputz- oder Aufputzgehäuses anlegbar ist. Hierdurch kann auch eine Verdrehsicherung des Messbechers im Unterputz- oder Aufputzgehäuse erreicht werden. Insbesondere kann der Messbecher im Bereich von dessen Einlass und/oder Auslass formschlüssig mit einem in den Einlassstutzen bzw. Auslassstutzen eingesetzten Einsatzteil zusammenwirken.

Des Weiteren erweist es sich als vorteilhaft, wenn der Messbecher ein Kunststoffspritzteil ist. Ein Boden des Messbechers kann auch als zusätzliches Bauteil ausgebildet sein.

Der vorzugsweise im Wesentlichen topfförmige Messbecher kann in vorteilhafter Weise an seinem dem Flügelrad zugewandten Boden eine domförmige Erhebung aufweisen, die ein Auflager nach Art eines Lagertischs für das freie Ende einer Achse des Flügelrads oder des Flügelrads selbst bildet.

Nach einem weiteren und an sich unabhängigen Erfindungsgedanken ist das Verhältnis eines Außendurchmessers D des Messbechers zum Außendurchmesser D_{F1} des Flügelrads ≤ 1,5, insbesondere ≤ 1,45, insbesondere ≤ 1,40 und weiter insbesondere ≤ 1,35.

Nach einem weiteren und an sich wiederum unabhängigen Erfindungsgedanken ist der Außendurchmesser D des Messbechers ≤ 60, insbesondere ≤ 55.

Derartige Messkapseln waren seither nicht denkbar, da der Außendurchmesser des Messbechers bei bekannten Messkapseln und Flügelradzählern der gattungsgemäßen Art sehr viel größer gewählt werden musste.

Die Erfindung betrifft ferner einen Flügelradzähler für Flüssigkeiten mit den Merkmalen des Anspruchs 16.

Das mit einer feststehenden Verrohrung, insbesondere in Gebäuden, verbindbare Unterputz- oder Aufputzgehäuse des Flügelradzählers besteht vorteilhafterweise aus Metall, insbesondere aus Messing. Es handelt sich dabei vorzugsweise um ein Pressmessingteil oder ein Kunststoffteil.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Messkapsel und eines erfindungsgemäßen Flügelradzählers. Sämtliche Merkmale der beigefügten Patentansprüche, insbesondere die Merkmale der unabhängigen Ansprüche, werden kombiniert mit jedem Merkmal eines anderen Anspruchs als erfindungswesentlich angesehen.

In der Zeichnung zeigt:
- Figur 1: eine Längsschnittansicht durch einen erfindungsgemäßen Flügelradzähler in einem Gehäuse;
- Figuren 2a bis d: verschiedene Ansichten und Schnittansichten eines Messbechers einer erfindungsgemäßen Messkapsel des Flügelradzählers nach Figur 1;
- Figuren 3a bis e: Darstellungen der Verbindung einer Außenhaube mit einer Innenhaube der Abdeckung und Befestigungsmittel hierfür;
- Figur 4: eine Ansicht eines Montagelements des Flügelradzählers;
- Figur 5: eine Draufsicht auf den Flügelradzähler mit oben aufgeschnittener Abdeckung; und
- Figur 6: eine perspektivische Ansicht der Innenhaube des Flügelradzählers.

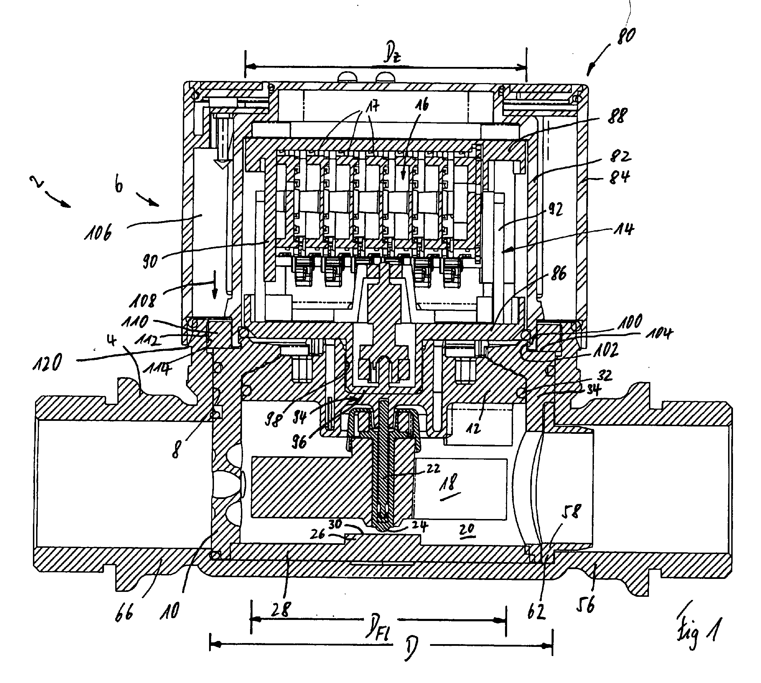

Figur 1 zeigt einen insgesamt mit dem Bezugszeichen 2 bezeichneten Flügelradzähler, der ein metallisches im dargestellten Fall für die Aufputzmontage geeignetes Gehäuse 4 sowie eine Messkapsel 6 umfasst, die in eine Montageöffnung 8 des Gehäuses 4 eingesetzt ist. Die Messkapsel 6 umfasst einen topfförmigen Messbecher 10, bei dem es sich um ein Kunststoffspritzteil handelt. Dieser Messbecher 10 bildet ein Gehäuseunterteil, welches über eine Druckplatte 12 mit einem Zählwerkteil 14 grundsätzlich lösbar, zum bestimmungsgemäßen Gebrauch jedoch unlösbar verbunden ist. In dem Zählwerkteil 14 ist oberhalb der Druckplatte 12 ein Zählwerk 16 mit Anzeigevorrichtungen 17 untergebracht. Es kann auch eine elektronische Sende-/Empfangseinrichtung zur drahtlosen Übermittlung von Messdaten vorgesehen sein. Der Zählwerkteil 14 bildet zusammen mit dem Messbecher 10 die austauschbare Messkapsel 6.

Ferner ersichtlich ist ein Flügelrad 18, welches in einer vom dem Messbecher 10 gebildeten Messkammer 20 drehbar angeordnet ist. Das Flügelrad 18 ist mit einem Ende seiner Achse 22 in der Druckplatte 12 gelagert. Das dieser Lagerstelle gegenüberliegende freie Ende 24 des Flügelrads 18 stützt sich punktförmig auf einer domförmigen Erhebung 26 eines Bodens 28 des Messbechers 10 ab, wobei die domförmige Erhebung 26 ein Auflager 30 für das freie Ende 24 des Flügelrads 18 bildet. Über eine Dichtung 32 zwischen Druckplatte 12 und der Wandung 34 des Messbechers 10 ist die Messkammer 20 flüssigkeitsdicht gegen das Äußere des Messbechers 10 und gegen den Zählwerkteil 14 abgedichtet.

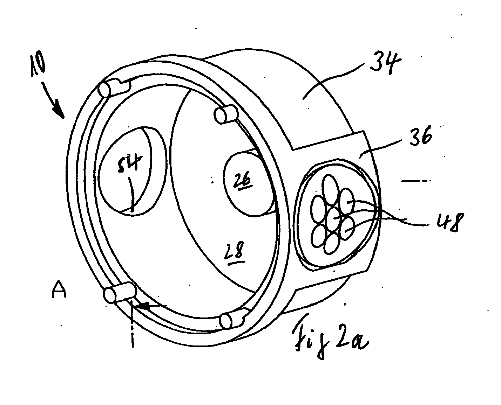

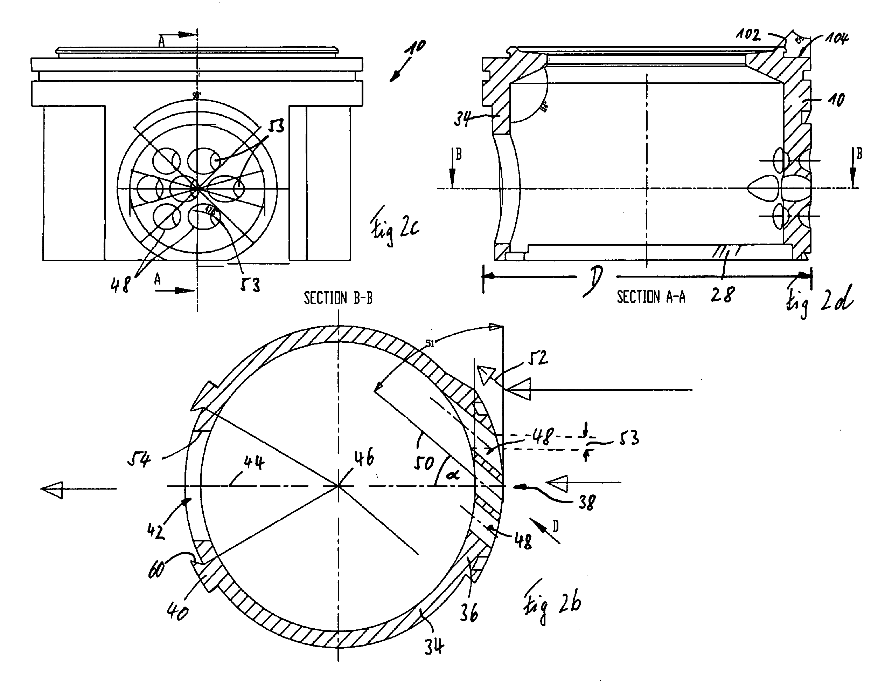

Zur näheren Beschreibung der Ausbildung des Messbechers 10 wird auf die Figuren 2a bis d Bezug genommen. Die jeweiligen Ansichten und Schnittebenen ergeben sich aus den ergänzenden Hinweisen in den Figuren. Figur 2a zeigt den Messbecher 10 in perspektivischer Darstellung. Man erkennt aus den Figuren 2a bis 2d, dass der Messbecher topfförmig ausgebildet ist und eine zylindrische Wandung 34 sowie den bereits erwähnten Boden 28 aufweist, der als separates scheibenförmiges Teil in den Messbecher einsetzbar ist. Ein Abschnitt 36 der Wandung 34 ist gegenüber angrenzenden Bereichen der Wandung 34 dicker ausgebildet. In diesem Abschnitt 36 ist ein Einlass 38 in den Messbecher 10 bzw. in die von dem Messbecher 10 begrenzte Messkammer 20 ausgebildet. Auf der diametral gegenüberliegenden Seite ist ebenfalls ein Abschnitt 40 der Wandung 34 mit vergrößerter Wandstärke ausgebildet, der einen Auslass 42 aus der Messkammer 20 bildet. Die Abschnitte 36 und 40 sowie der Einlass 38 und der Auslass 42 sind in einer Längsmittelachse 44 durch einen Mittelpunkt 46 des Messbechers 10 angeordnet. Der Messbecher 10 ist (abgesehen von noch näher zu beschreibenden Einströmöffnungen) bezüglich einer die Längsmittelachse 44 einschließenden Ebene senkrecht zur Zeichnungsebene der Figur 2b symmetrisch ausgebildet.

Der Einlass 38 weist mehrere Einströmöffnungen 48 durch den Abschnitt 36 der Wandung 34 auf. Diese mehreren Einströmöffnungen 48 (im dargestellten Fall sieben Einströmöffnungen, wobei sechs Einströmöffnungen um eine zentral angeordnete Einströmöffnung herum angeordnet sind) sind ihrerseits gerade, also entlang einer geraden Achse 50 erstreckt, die aber um einen Winkel α zur Längsmittelachse 44 geneigt ist, wobei die Neigung in der Drehebene des Flügelrads 18, also in der Zeichnungsebene der Figur 2b liegt. Auf diese Weise bilden die Einströmöffnungen 48 verhältnismäßig kurze, im dargestellten Fall nur bis etwa 10 mm lange Einströmkanäle, wobei jeweils die in der Mitte einer Einströmöffnung 48 in Richtung der geraden Achse 50 ermittelte Länge 52 zwischen Innenumfang und Außenumfang der Wandung 34 genommen wird (Figur 2b). Durch diese Neigung der mehreren Einströmöffnungen 48 zur Längsmittelachse 44 wird eine vorteilhafte Umlenkung des in Richtung der Längsmittelachse 44 durch den Einlass 38 in den Messbecher 10 einströmenden Wassers derart erreicht, dass die Flüssigkeit die Flügel des Flügelrads 18 in einem eher radial äußeren Bereich und in einer in etwa tangentialen Richtung beaufschlagt, was wünschenswert ist.

Querschnittsfläche, Länge und Neigung der Einströmöffnungen 48 sind dabei derart, dass in Richtung der Längsmittelachse 44 jeweils eine lichte Querschnittsfläche 53 in das Innere des Messbechers gebildet wird, was sich gerade im Hinblick auf geringe Strömungsgeschwindigkeiten als besonders vorteilhaft erwiesen hat. Bei geringer Strömungsgeschwindigkeit wird wohl ein Teil der Flüssigkeit der lichten Querschnittsfläche 53 folgend das Flügelrad weiter innen beaufschlagen; dennoch konnte hierdurch die Zählgenauigkeit erhöht werden.

Im dargestellten Fall sind die Einströmöffnungen 48 als Durchgangsöffnungen durch den Abschnitt 36 der Wandung 34 des Messbechers 10 ausgebildet; sie werden also von der Wandung 34 des Messbechers 10 selbst gebildet.

Im dargestellten Fall ist das Verhältnis eines Außendurchmessers D des Messbechers 10 (s. Figur 2d) zum Außendurchmesser D_{F1} des Flügelrads 18 1,34 (55 mm/41 mm = 1,34). Wenn beispielsweise ein Flügelrad mit 38 mm Außendurchmesser verwendet wird, so wäre das Verhältnis 1,44. Es wurde festgestellt, dass durch die erfindungsgemäße Ausbildung der vorstehend beschriebenen Komponenten eine optimale Ausnutzung des zur Verfügung stehenden Bauraums bzw. eine Minimierung des Bauraums des Unterputz- oder Aufputzgehäuses 4 des Flügelradzählers 2 erreicht werden kann.

In besonders vorteilhafter Weise ist dieser Außendurchmesser D des Messbechers 10 kleiner oder gleich 60 mm, insbesondere kleiner oder gleich 55 mm.

Der Auslass 42 des Messbechers 10 umfasst eine einzige große Ausströmöffnung 54. Auch hier könnte jedoch eine Anzahl von mehreren Ausströmöffnungen vorgesehen werden, was sich jedoch nicht als vorteilsbegründend erwiesen hat. Stattdessen erweist es sich als vorteilhaft, wenn in einen Auslassstutzen 56 des Gehäuses 4 (Figur 1) eine Bundbuchse 58 von innen her eingesetzt ist. Durch eine aus Figur 2b ersichtliche schwalbenschwanzförmige Freischneidung 60 kann der Messbecher 10 von oben in das Gehäuse 4 eingesetzt werden, wobei ein Bund 62 der Bundbuchse 58 in der schwalbenschwanzförmigen Freischneidung 60 aufgenommen wird. Hierbei wird eine wenigstens nahezu dichtende Anlage des Auslasses 42 des Messbechers 10 an die Innenseite des Gehäuses 4 ausgebildet. Es wird aber vor allem eine verdrehsichere Anordnung des Messbechers 10 im Gehäuse 4 erreicht. Im beispielhaft dargestellten Fall ist im Einlassstutzen 66 des Gehäuses 4 kein Einsatzteil vorgesehen.

Unter Bezugnahme auf die Figuren 1, 3 und 4 wird nun der Zählwerkteil 14 der Messkapsel 6 und die Montage der Messkapsel 6 in dem Gehäuse 4 des Flügelradzählers 2 erläutert. Der Zählwerkteil 14 ist von einer Abdeckung 80 überfangen, die zumindest teilweise durchsichtig ausgebildet ist und so eine Einsichtnahme auf das Zählwerk 16 und dessen Anzeige ermöglicht. Die Abdeckung 80 umfasst eine Innenhaube 82 und eine Außenhaube 84. Der Zählwerkteil 14 ist verhältnismäßig offen ausgebildet; er umfasst eine Basisplatte 86 und eine Deckplatte 88, die durch Wandabschnitte 90 und Stützstifte 92 gegeneinander abgestützt sind. Zwischen Basisplatte 86 und Deckplatte 88 ist eine Getriebeeinrichtung vorgesehen, die die Drehbewegung des Flügelrads 18 auf das Zählwerk 16 überträgt. Zur Aufnahme der Drehbewegung des Flügelrads wird eine magnetische Kopplungseinrichtung 94 verwendet, die in einem domförmigen von der Basisplatte 86 ausgehend nach unten vorstehenden Gehäusebereich 96 des Zählwerkteils 14 untergebracht ist, welcher Gehäusebereich 96 sich in eine komplementäre Ausnehmung 98 der Druckplatte 12 hineinerstreckt. Die Innenhaube 82 weist an ihrem dem Messbecher 10 zugewandten Rand schnappende oder rastende Hintergriffselemente 100 auf, die beim Aufstülpen der Innenhaube 82 auf den Zählwerkteil 14 mit komplementären Hintergriffselementen 102 (s. Figur 2d) im Bereich der oberen Stirnseite 104 des Messbechers 10 in eine formschlüssige Montagestellung rasten. Die Innenhaube 82 ist für den Endverbraucher nicht mehr zerstörungsfrei von dem Messbecher 10 lösbar; sie ist allenfalls gegenüber dem Messbecher 10 drehbar. Auf diese Weise bilden der Messbecher 10 und der Zählwerkteil 14 eine eichtechnisch abgeschlossene und während des bestimmungsgemäßen Gebrauchs nicht zugängliche Einheit.

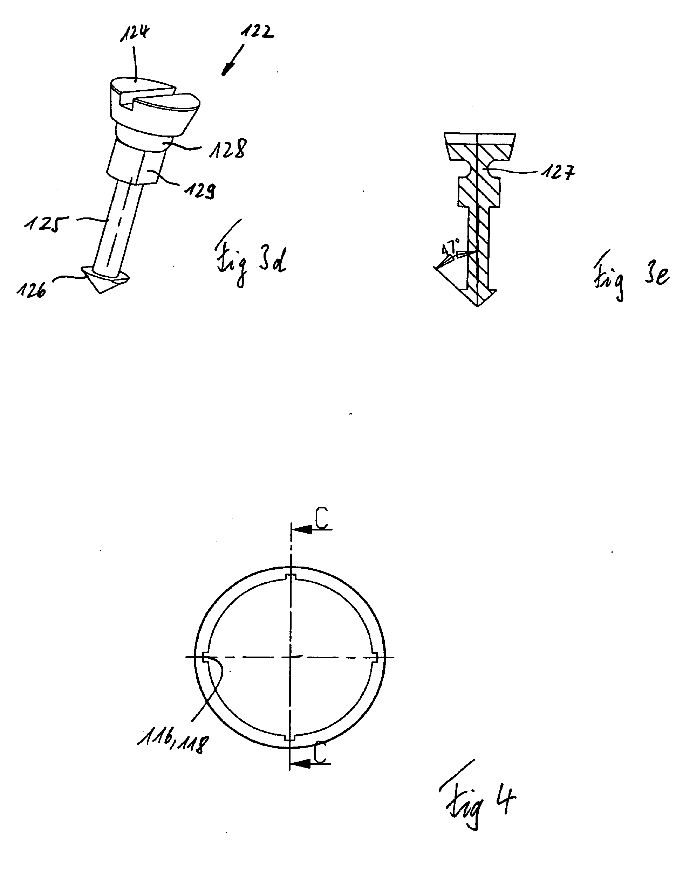

Insbesondere aufgrund der vorausgehend beschriebenen Ausbildung des Messbechers 10 und der Einströmöffnungen 48 war es möglich, den Messbecher 10 sehr klein bauend auszubilden, und zwar insbesondere auf Abmessungen, die sonst nur bei Flüssigkeitszählern ohne austauschbare Messkapsel realisiert werden konnten. Daraufhin wurden die Komponenten des Zählwerks 16 weiter so angeordnet, dass der Außendurchmesser der Innenhaube 82 einige Millimeter, insbesondere wenigstens 5, vorzugsweise wenigstens 8 mm kleiner ist als der Innendurchmesser der Außenhaube 84. Auf diese Weise wird ein radialer Bauraum 106 zwischen der Innenhaube 82 und der Außenhaube 84 geschaffen, der in vielfacher Weise nutzbar ist. Des Weiteren ist der Außendurchmesser der Innenhaube 82 kleiner als der Durchmesser der Stirnseite 104 des Messbechers 10, d. h. die Stirnseite des Messbechers 10 ist in axialer Richtung 108 zugänglich. Dies eröffnet in vorteilhafter Weise aber die Möglichkeit, dass ein insbesondere ringförmiges Montageelement 110 in axialer Richtung 108 auf oder über die Innenhaube 82 aufschiebbar ist. Mittels dieses Montageelements 110 wird die gesamte Messkapsel 6 in das Gehäuse 4 fest eingeschraubt. Hierzu weist das Montageelement 110 ein Außengewinde 112 und der obere Randabschnitt des Gehäuses 4 ein Innengewinde 114 auf. Als besonders vorteilhaft erweist es sich, dass das Montageelemente 110 axial zugänglich ist, und zwar durch den radialen Bauraum 106 hindurch bei abgenommener Außenhaube 84. Hierfür weist das Montageelement 110 vorzugsweise mehrere Werkzeugansetzstellen 116 auf, beispielsweise in Form von nach radial innen offenen Ausnehmungen 118 (ersichtlich aus Figur 4).

Nach Fixieren der Messkapsel 6 in dem Gehäuse 4 wird die Außenhaube 84 aufgesetzt. Sie übergreift im dargestellten Fall den zylindrischen Randabschnitt 120 des metallischen Gehäuses 4 außen und ist dort beispielsweise klemmschlüssig gehalten. Es wäre auch denkbar, dass die Außenhaube dort formschlüssig verrastet und schon auf diese Weise nicht zerstörungsfrei entfernt werden kann: Vorzugsweise ist die Außenhaube 84 gegen die Innenhaube 82 befestigbar. Hierfür kann beispielsweise eine Schraubverbindung oder eine Verrastung vorgesehen werden. Im dargestellten Fall ist eine Plombe 122 verwendet, die zugleich und selbst die Befestigung bewirkt. Stets sollte die Außenhaube 84 gegenüber dem Gehäuse 4, vorzugsweise unter Drehmitnahme der Innenhaube 82, drehbar sein.

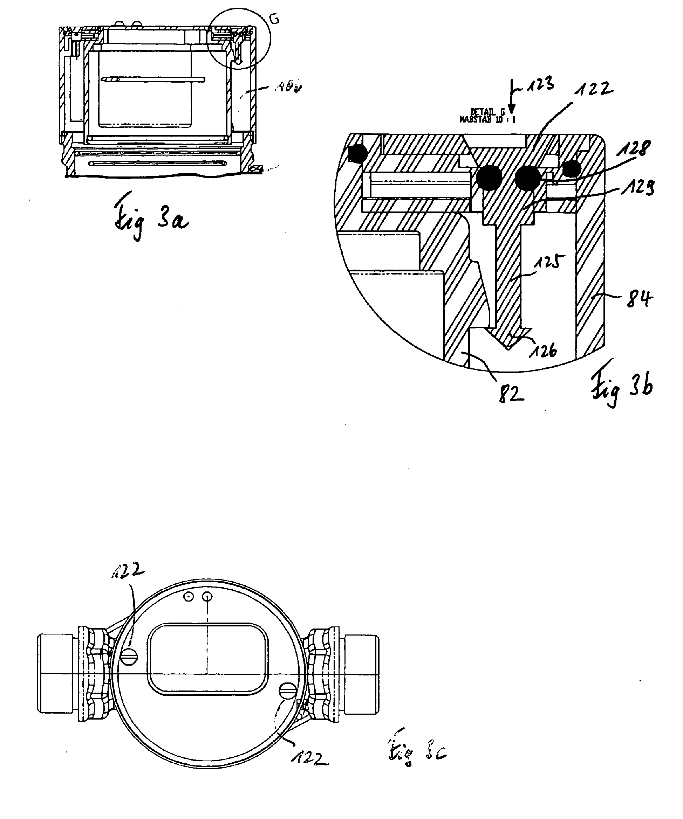

Die Ausbildung der Plombe 122 und die Befestigung der Außenhaube 84 an der Innenhaube 82 ist aus Figuren 3a bis 3e ersichtlich. Bei der Plombe 122 handelt es sich um ein in Richtung des Pfeils 123 steckbares Kunststoffteil mit einem Schraubenkopf 124 und einem Schaft 125 mit einem schnappbaren hintergreifenden freien Ende 126, mit dem die Plombe 122 in die in Figur 3b dargestellte Hintergriffsstellung mit der Innenhaube 82 bringbar ist. Zwischen Schraubenkopf 124 und Schaft 125 ist ein durchmesserverjüngter Bereich 127 vorgesehen, der eine Sollbruchstelle bildet. In diesem Bereich ist ein O-Ring 128 für Dichtungszwecke angeordnet. Zwischen dem durchmesserverjüngten Bereich 127 und dem Schaft 125 ist ein unrunder Abschnitt 129 ausgebildet, der eine Verdrehsicherung zu der Außenhaube 84 bildet. Ausgehend von der in Figur 3b dargestellten verrasteten Position der Plombe 122 ist die Außenhaube 84 nicht zerstörungsfrei von der Innenhaube 82 abhebbar. Hierfür muss erst der Schraubenkopf 124 der Plombe 122 mit einem Schraubenzieher abgedreht und dabei zerstört werden.

Auf diese Weise bildet die Außenhaube 84 selbst eine Plombe für die gesamte Messkapsel 6. Ohne Entfernen der Außenhaube 84 ist nämlich die Messkapsel 6 nicht aus ihrer bestimmungsgemäßen Montageposition in dem Gehäuse 4 lösbar, da ein Zugriff auf das Montageelement 110 dann nicht möglich ist.

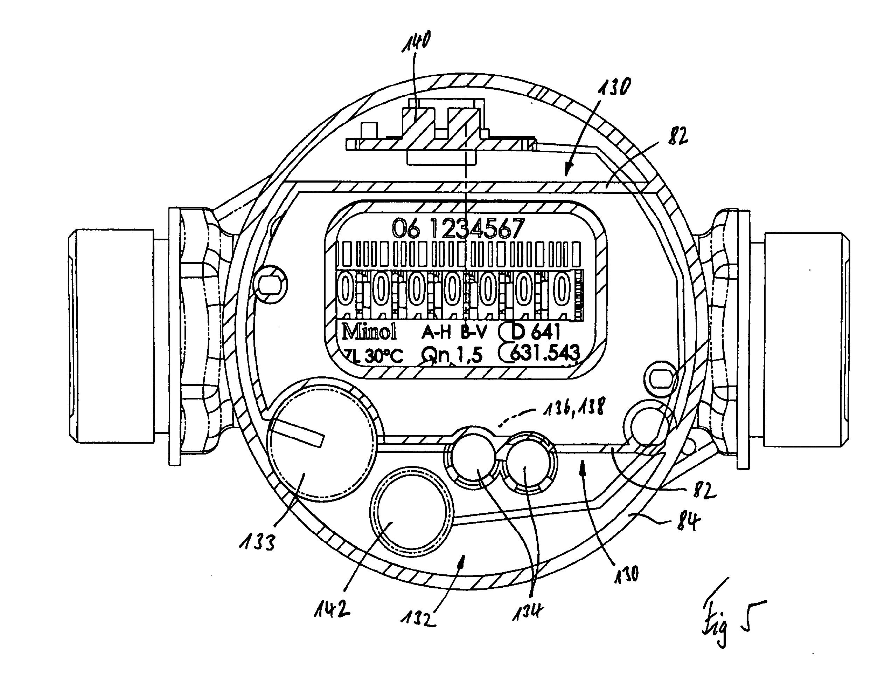

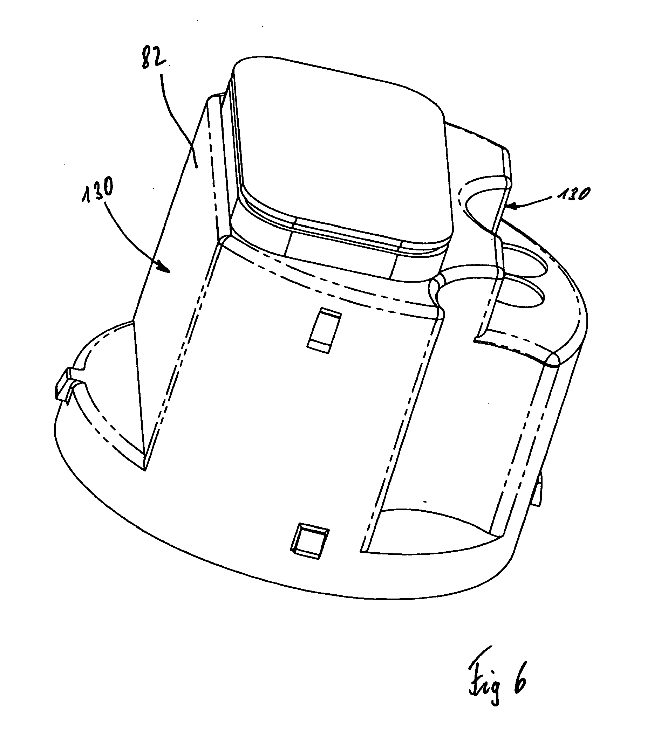

Man erkennt aus Figur 5 und 6, dass die Innenhaube 82 keine streng zylindrische Gestalt aufweist, sondern nach radial innen rückspringende Bereiche 130 aufweist, die den schon vorhandenen radialen Bauraum 106 zwischen Innenhaube 82 und Außenhaube 84 noch vergrößern. In diesen rückspringenden Bereichen 130 sind in die Außenhaube 84 integrierte elektrische und elektronische Komponenten, die eine Einrichtung 132 zur Erfassung und zur Aussendung von Verbrauchsdaten bilden, untergebracht, wenn die Außenhaube 84 in ihre bestimmungsgemäße Position an dem Gehäuse 4 des Flügelradzählers 2 gebracht ist. Die elektrischen und elektronischen Komponenten umfassen beispielsweise eine Batterie 133, Abgriffsspulen 134, die mit einer unter der Innenhaube 82 vorgesehenen rotierenden Scheibe 136 mit einem Magneten 138 des Zählwerks 16 zusammenwirken, sowie ein Rechenmittel/Prozessor 140 und eine Sendeeinrichtung/Antenne 142. Funkauslesbare elektronische Einrichtungen der hier in Frage kommenden Art und deren Komponenten sind aber grundsätzlich bekannt und brauchen daher nicht näher erläutert zu werden. Wesentlich ist jedoch ihre wasser- bzw. feuchtigkeitsdichte Integration in die Außenhaube 84.

## Patentansprüche

1. Messkapsel (6) für einen tangential angeströmten Flüssigkeitszähler (2), zum austauschbaren Einsatz in ein Unterputz- oder Aufputzgehäuse (4) des Flüssigkeitszählers (2), wobei die Messkapsel (6) einen eine Messkammer (20) mit einem darin aufgenommenen Flügelrad (18) begrenzenden Messbecher (10) mit einem Einlass (38) in die Messkammer (20) und einem Auslass (42) aus der Messkammer (20) und einen Zählwerkteil (14) aufweist, **dadurch gekennzeichnet, dass** der Einlass (38) und der Auslass (42) des Messbechers (10) in einer Längsmittelachse (44) des Messbechers (10) und des Unterputz- oder Aufputzgehäuses (4) liegen und dass der Einlass (38) mehrere zu dieser Längsmittelachse (44) geneigte Einströmöffnungen (48) aufweist, die eine zumindest teilweise Umlenkung der Flüssigkeit in eine tangentiale Richtung zum Flügelrad bewirken, und dass die Messkapsel (6) von einer gegebenenfalls teilweise durchsichtigen Abdeckung (80) überfangen ist und dass der Außendurchmesser D_{z} des Zählwerkteils (14) geringer ist als der Außendurchmesser D des Messbechers (10) und dass die Abdeckung (80) eine Innenhaube (82) und eine Außenhaube (84) umfasst und die Innenhaube (82) den Zählwerkteil (14) überfängt und zur Bildung einer eichtechnisch abgeschlossenen Einheit unmittelbar mit dem Messbecher (10) verbunden ist, indem sie über schnappende, rastende Hintergriffselemente (100) gegenüber dem Messbecher (10) fixiert ist, so dass sie für den Endverbraucher nicht mehr zerstörungsfrei von dem Messbecher (10) lösbar ist, und dass zwischen der Innenhaube (82) und der Außenhaube (84) ein radialer Bauraum (106) vorgesehen ist, der bei abgenommener Außenhaube (84) zu Montagezwecken nutzbar ist, indem die Messkapsel (6) mittels eines über den Zählwerkteil (14) mit aufgebrachter Innenhaube (82) stülpbaren ringförmigen Montageelements (110) gegen das Unterputz- oder Aufputzgehäuse (4) fixierbar ist, indem das ringförmige Montageelement (110) ein Außengewinde (112) trägt, mit dem es in ein Innengewinde (114) am oberen Rand des Unterputz- oder Aufputzgehäuses (4) einschraubbar ist.

2. Messkapsel nach Anspruch 1, **dadurch gekennzeichnet, dass** der Außendurchmesser des Montageelements (110) geringer ist als der Innendurchmesser der Außenhaube (84), so dass die Außenhaube (84) die am Unterputz- oder Aufputzgehäuse (4) fixierte Messkapsel (10) abzudecken vermag.

3. Messkapsel nach einem oder mehreren der vorstehenden Ansprüche, **dadurch gekennzeichnet, dass** das Montageelement (110) Werkzeugansetzstellen (116) aufweist, um mittels eines Montagewerkzeugs in Fixierstellung gebracht werden zu können, insbesondere das Montageelement (110) radial innen Ausnehmungen (118) aufweist, die die Werkzeugansetzstellen (116) bilden.

4. Messkapsel nach einem oder mehreren der vorstehenden Ansprüche, **dadurch gekennzeichnet, dass** die Innenhaube (81), insbesondere zusammen mit dem Zählwerkteil (14), gegenüber dem Messbecher (10) verdrehbar ist.

5. Messkapsel nach einem oder mehreren der vorstehenden Ansprüche, **dadurch gekennzeichnet, dass** die Außenhaube (84) mittels einer Plombe gegen unbefugtes Entfernen gesichert ist.

6. Messkapsel nach einem oder mehreren der vorstehenden Ansprüche, **dadurch gekennzeichnet, dass** die Außenhaube (84) gegen die Innenhaube (82) fixiert ist und insbesondere gegenüber dem Gehäuse (4) unter Drehmitnahme der Innenhaube (82) drehbar ist.

7. Messkapsel nach einem oder mehreren der vorstehenden Ansprüche, **dadurch gekennzeichnet, dass** die Außenhaube (84) das Montageelement (110) so umgibt, dass es ohne die Außenhaube (84) zu entfernen nicht zugänglich ist.

8. Messkapsel nach einem oder mehreren der vorstehenden Ansprüche, **dadurch gekennzeichnet, dass** der radiale Bauraum (106) zur Unterbringung weiterer Komponenten der Messkapsel dient.

9. Messkapsel nach Anspruch 8, **dadurch gekennzeichnet, dass** in dem radialen Bauraum (106) eine elektronische Einrichtung (132) zur Erfassung und zur Aussendung von Verbrauchsdaten vorgesehen ist, die insbesondere wasserdicht in die Außenhaube (84) integriert ist.

10. Messkapsel nach Anspruch 9, **dadurch gekennzeichnet, dass** das Zählwerk (116) und die Innenhaube (82) nach radial innen rückspringende Bereiche (130) aufweist, in welche Komponenten der elektronischen Einrichtung (132) einragen oder darin aufgenommen sind.

11. Messkapsel nach einem oder mehreren der vorstehenden Ansprüche, **dadurch gekennzeichnet, dass** das Verhältnis eines Außendurchmessers D des Messbechers (10) zum Außendurchmesser D_{F1} des Flügelrads (18) ≤ 1,5, insbesondere ≤ 1,45, insbesondere ≤ 1,4 und weiter insbesondere ≤ 1,35 ist.

12. Messkapsel nach einem oder mehreren der vorstehenden Ansprüche, **dadurch gekennzeichnet, dass** ein Außendurchmesser D des Messbechers (10) ≤ 60 mm, insbesondere ≤ 55 mm ist.

13. Flügelradzähler für Flüssigkeiten mit einem Unterputz- oder Aufputzgehäuse (4) mit einem Einlassstutzen (66) und einem Auslassstutzen (56), die in einer Längsmittelachse (44) des Unterputz- oder Aufputzgehäuses (4) liegen, und mit einer in das Unterputz- oder Aufputzgehäuse (4) einsetzbaren Messkapsel (6) **nach einem oder mehreren der vorstehenden Ansprüche**, wobei Einlass (38) und Auslass (42) der Messkapsel (6) fluchtend zum Einlassstutzen (66) und zum Auslassstutzen (56) des Unterputz- oder Aufputzgehäuses (4) zu liegen kommen .

## Claims

1. Measuring capsule (6) for a tangential-flow liquid meter (2), for interchangeable use in a flush-mounted or surface-mounted housing (4) of the liquid meter (2), the measuring capsule (6) having a measuring cup (10) which bounds a measuring chamber (20) with a vane wheel (18) held therein and having an inlet (38) into the measuring chamber (20) and an outlet (42) from the measuring chamber (20) and a meter part (14), **characterised in that** the inlet (38) and the outlet (42) of the measuring cup (10) lie on a longitudinal central axis (44) of the measuring cup (10) and of the flush-mounted or surface-mounted housing (4), and **in that** the inlet (38) has a plurality of inflow openings (48) inclined relative to this longitudinal central axis (44) which effect an at least partial deflection of the liquid into a direction tangential to the vane wheel, and **in that** the measuring capsule (6) is covered with an optionally partly transparent cover (80) and **in that** the external diameter D_{z} of the meter part (14) is smaller than the external diameter D of the measuring cup (10) and **in that** the cover (80) comprises an inner hood (82) and an outer hood (84), and the inner hood (82) covers the meter part (14) and, in order to form a unit which is self-contained with regard to calibration, is connected directly to the measuring cup (10) **in that** it is fixed relative to the measuring cup (10) by means of snap-locking engaging elements (100), such that it can no longer be detached from the measuring cup (10) by the end consumer without being damaged, and **in that** a radial installation space (106) is provided between the inner hood (82) and the outer hood (84) which can be used for mounting purposes when the outer hood (84) is removed **in that** the measuring capsule (6) can be fixed against the flush-mounted or surface-mounted housing (4) by means of an annular mounting element (110) which can be fitted over the meter part (14) with mounted inner hood (82) **in that** the annular mounting element (110) carries an external thread (112) with which it can be screwed into an internal thread (114) at the upper edge of the flush-mounted or surface-mounted housing (4).

2. Measuring capsule according to claim 1, **characterised in that** the external diameter of the mounting element (110) is smaller than the internal diameter of the outer hood (84) so that the outer hood (84) is able to cover the measuring capsule (10) fixed to the flush-mounted or surface-mounted housing (4).

3. Measuring capsule according to one or more of the preceding claims, **characterised in that** the mounting element (110) has tool attachment points (116) to enable it to be brought into a fixing position by means of a mounting tool, in particular **in that** the mounting element (110) has radially inner recesses (118) which form the tool attachment points (116).

4. Measuring capsule according to one or more of the preceding claims, **characterised in that** the inner hood (81), in particular together with the meter part (14), can be rotated relative to the measuring cup (10).

5. Measuring capsule according to one or more of the preceding claims, **characterised in that** the outer hood (84) is secured against unauthorised removal by means of a lead seal.

6. Measuring capsule according to one or more of the preceding claims, **characterised in that** the outer hood (84) is fixed to the inner hood (82) and is, in particular, rotatable relative to the housing (4), rotating the inner hood (82) with it.

7. Measuring capsule according to one or more of the preceding claims, **characterised in that** the outer hood (84) encloses the mounting element (110) in such a way that it is not accessible without removing the outer hood (84).

8. Measuring capsule according to one or more of the preceding claims, **characterised in that** the radial installation space (106) serves to house further components of the measuring capsule.

9. Measuring capsule according to claim 8, **characterised in that** an electronic device (132) for acquiring and for transmitting consumption data is provided in the radial installation space (106), in particular being integrated in a water-tight manner in the outer hood (84).

10. Measuring capsule according to claim 9, **characterised in that** the meter (116) and the inner hood (82) have regions (130) which are recessed radially inwards and into which components of the electronic device (132) project or in which they are held.

11. Measuring capsule according to one or more of the preceding claims, **characterised in that** the ratio of an external diameter D of the measuring cup (10) to the external diameter D_{F1} of the vane wheel (18) is ≤ 1.5, in particular ≤ 1.45, in particular ≤ 1.4 and further in particular ≤ 1.35.

12. Measuring capsule according to one or more of the preceding claims, **characterised in that** an external diameter D of the measuring cup (10) is ≤ 60 mm, in particular ≤ 55 mm.

13. Vane wheel meter for liquids, comprising a flush-mounted or surface-mounted housing (4) having an inlet connection (66) and an outlet connection (56) which lie on a longitudinal central axis (44) of the flush-mounted or surface-mounted housing (4), and a measuring capsule (6) according to one or more of the preceding claims which can be inserted into the flush-mounted or surface-mounted housing (4), wherein the inlet (38) and outlet (42) of the measuring capsule (6) come to rest flush with the inlet connection (66) and with the outlet connection (56) of the flush-mounted or surface-mounted housing (4).

## Revendications

1. Capsule de mesure (6) pour un compteur de liquide (2) à flux tangentiel, destinée à être mise en place de manière amovible dans un boîtier (4) encastré ou apparent du compteur de liquide (2), ladite capsule de mesure (6) comportant un godet de mesure (10), délimitant une chambre de mesure (20), dans laquelle est logée une roue à ailettes (18), et muni d'une entrée (38) vers la chambre de mesure (20) et d'un élément totalisateur (14), **caractérisée en ce que** l'entrée (38) et la sortie (42) du godet de mesure (10) se situent dans un axe médian longitudinal (44) du godet de mesure (10) et du boîtier (4) encastré ou apparent, et **en ce que** l'entrée (38) comporte plusieurs ouvertures d'admission (48), inclinées par rapport audit axe médian longitudinal (44) et provoquant une déviation au moins partielle du liquide dans une direction tangentielle à la roue à ailettes, et **en ce que** la capsule de mesure (6) est recouverte par un couvercle (80), le cas échéant, partiellement transparent, et **en ce que** le diamètre extérieur D₂ de l'élément totalisateur (14) est inférieur au diamètre extérieur D du godet de mesure (10), et **en ce que** le couvercle (80) comporte une calotte intérieure (82) et une calotte extérieure (84), et ladite calotte intérieure (82) recouvre l'élément totalisateur (14) et est reliée directement au godet de mesure (10) pour former une unité fermée sur le plan de la technique d'étalonnage, du fait qu'elle est fixée au godet de mesure (10) par l'intermédiaire d'éléments d'enserrement (100) à encliquetage et blocage, de telle sorte que le consommateur final ne peut pas la retirer sans endommager le godet de mesure (10), et **en ce qu'**entre la calotte intérieure (82) et la calotte extérieure (84) est prévu un espace (106) radial qui, lorsque la calotte extérieure (84) est retirée, peut être utilisé pour des opérations de montage, du fait que la capsule de mesure (6) peut être fixée contre le boîtier (4) encastré ou apparent au moyen d'un élément de fixation (110) annulaire pouvant venir en recouvrement sur l'élément totalisateur (14) avec la calotte intérieure (82) mise en place, du fait que l'élément de fixation (110) annulaire est pourvu d'un filetage extérieur (112), par lequel il peut être vissé dans un filetage intérieur (114) sur le bord supérieur du boîtier (4) encastré ou apparent.

2. Capsule de mesure selon la revendication 1, **caractérisée en ce que** le diamètre extérieur de l'élément de fixation (110) est inférieur au diamètre intérieur de la calotte extérieure (84), de telle sorte que la calotte extérieure (84) peut recouvrir la capsule de mesure (6) fixée sur le boîtier (4) encastré ou apparent.

3. Capsule de mesure selon une ou plusieurs des revendications précédentes, **caractérisée en ce que** l'élément de fixation (110) comporte des emplacements (116) pour la pose d'un outil, pour pouvoir être amené dans la position de fixation au moyen d'un outil de montage, en particulier l'élément de fixation (110) comporte des évidements (118) intérieurs qui forment les emplacements (116) pour la pose d'un outil.

4. Capsule de mesure selon une ou plusieurs des revendications précédentes, **caractérisée en ce que** la calotte intérieure (82), en particulier conjointement avec l'élément totalisateur (14), peut tourner par rapport au godet de mesure (10).

5. Capsule de mesure selon une ou plusieurs des revendications précédentes, **caractérisée en ce que** la calotte extérieure (84) est sécurisée par un plomb contre toute tentative de retrait non autorisée.

6. Capsule de mesure selon une ou plusieurs des revendications précédentes, **caractérisée en ce que** la calotte extérieure (84) est fixée contre la calotte intérieure (82) et est apte à tourner en particulier par rapport au boîtier (4) en entraînant en rotation la calotte intérieure (82).

7. Capsule de mesure selon une ou plusieurs des revendications précédentes, **caractérisée en ce que** la calotte extérieure (84) entoure l'élément de fixation (110) de telle sorte qu'il n'est pas accessible sans retirer la calotte extérieure (84).

8. Capsule de mesure selon une ou plusieurs des revendications précédentes, **caractérisée en ce que** l'espace (106) radial est destiné à recevoir d'autres composants de la capsule de mesure.

9. Capsule de mesure selon la revendication 8, **caractérisée en ce que** dans l'espace (106) radial est prévu un équipement électronique (132) pour enregistrer et émettre des données de consommation, lequel est intégré, en particulier de manière étanche à l'eau, dans la calotte extérieure (84).

10. Capsule de mesure selon la revendication 9, **caractérisée en ce que** le totalisateur (116) et la calotte intérieure (82) comportent des zones (130) radialement en retrait vers l'intérieur, dans lesquelles s'engagent ou sont logés des composants de l'équipement électronique (132).

11. Capsule de mesure selon une ou plusieurs des revendications précédentes, **caractérisée en ce que** le rapport d'un diamètre extérieur D du godet de mesure (10) sur le diamètre extérieur D_{F1} de la roue à ailettes (18) est ≤ 1,5, en particulier ≤ 1,45, en particulier ≤ 1,4 et encore mieux ≤ 1,35.

12. Capsule de mesure selon une ou plusieurs des revendications précédentes, **caractérisée en ce qu'**un diamètre extérieur D du godet de mesure (10) est ≤ 60 mm, en particulier ≤ 55 mm.

13. Compteur à roue à ailettes pour des liquides, comportant un boîtier (4) encastré ou apparent avec une tubulure d'entrée (66) et une tubulure de sortie (56) qui sont situées dans un axe médian longitudinal (44) du boîtier (4) encastré ou apparent, et comportant une capsule de mesure (6) pouvant être mise en place dans le boîtier (4) encastré ou apparent, selon une ou plusieurs des revendications précédentes, dans lequel l'entrée (38) et la sortie (42) de la capsule de mesure (6) sont disposées en alignement avec la tubulure d'entrée (66) et la tubulure de sortie (56) du boîtier (4) encastré ou apparent.
